(19) Europäisches Patentamt
European Patent Office
Office européen des brevets

(11) **EP 2 547 709 B1**

(12) **EUROPÄISCHE PATENTSCHRIFT**

(45) Veröffentlichungstag und Bekanntmachung des Hinweises auf die Patenterteilung:
**29.07.2020  Patentblatt 2020/31**

(21) Anmeldenummer: **11709125.6**

(22) Anmeldetag: **18.03.2011**

(51) Int Cl.:
*C08G 18/08* *(2006.01)*        *C08G 18/58* *(2006.01)*
*B05D 7/00* *(2006.01)*          *C09D 5/44* *(2006.01)*

(86) Internationale Anmeldenummer:
**PCT/EP2011/054112**

(87) Internationale Veröffentlichungsnummer:
**WO 2011/113929 (22.09.2011 Gazette 2011/38)**

(54) **VERFAHREN ZUR BESCHICHTUNG EINES METALL- ODER KUNSTSTOFFSUBSTRATS, DARAUS ERHÄLTLICHE BESCHICHTUNG UND BESCHICHTETES SUBSTRAT**

METHOD FOR COATING A METAL OR PLASTIC SUBSTRATE, COATING THAT CAN BE OBTAINED THEREFROM, AND COATED SUBSTRATE

PROCÉDÉ DE REVÊTEMENT D'UN SUBSTRAT MÉTALLIQUE OU PLASTIQUE, REVÊTEMENT ET SUBSTRAT REVÊTU POUVANT ÊTRE OBTENUS PAR LEDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.03.2010   DE 102010012047**

(43) Veröffentlichungstag der Anmeldung:
**23.01.2013   Patentblatt 2013/04**

(73) Patentinhaber: **BASF Coatings GmbH**
**48165 Münster (DE)**

(72) Erfinder:
• **GRABBE, Michael**
  **48308 Senden (DE)**
• **LETTMANN, Bernhard**
  **48317 Drensteinfurt (DE)**
• **OTT, Günther**
  **48167 Münster (DE)**

(56) Entgegenhaltungen:
**EP-A1- 1 813 633      EP-A2- 0 819 733**
**EP-B1- 0 941 295**

**Beschreibung**

Die Erfindung betrifft ein Verfahren zur Beschichtung eines Metall- oder Kunststoffsubstrats, die daraus erhältliche Beschichtung und das beschichtete Substrat.

Verfahren zur Beschichtung von Metallsubstraten sind aus dem Stand der Technik bekannt,

DE 39 15 080 A1 beschreibt ein Verfahren zur Beschichtung leitfähiger Substrate, bei dem das Substrat in einen wässrigen Elektrotauchlack eingetaucht wird, der mindestens ein kathodisch abscheidbares Kunstharz enthält. Nach dem elektrophoretischen Abscheiden eines Films auf dem Substrat wird der abgeschiedene Lackfilm eingebrannt. Als kathodisch abscheidbares Kunstharz kann beispielsweise ein kationisches, aminmodifiziertes Epoxidharz eingesetzt werden. Dieses ist entweder selbstvernetzend, wobei das aminmodifizierte Epoxidharz beispielsweise blockierte Isocyanatgruppen enthält, oder es ist fremdvernetzend, wobei der wässrige Elektrotauchlack eine geeignete Vernetzerkomponente enthält, beispielsweise ein blockiertes Polyisocyanat. Das Einbrennen der Beschichtung erfolgt im Allgemeinen bei Temperaturen von 130 bis 200°C.

EP 0 941 295 A1 beschreibt ein Verfahren zur Beschichtung von Substraten, vorzugsweise aus Metall, durch Reinigen der Substratoberfläche, gegebenenfalls Auftragen eines Vorbehandlungsmittels, Aufbringen eines Primers und Auftragen eines Decklacks durch Spritzen, Tauchen, Rakeln, Walzen oder Streichen, wobei der Primer ein aminmodifiziertes Epoxidharz enthält. Wie in DE 39 15 080 A1 kann das aminmodifizierte Epoxidharz entweder selbstvernetzend sein, wobei das aminmodifizierte Epoxidharz beispielsweise blockierte Isocyanatgruppen enthält, oder es ist fremdvernetzend, wobei der Primer zusätzlich eine geeignete Vernetzerkomponente enthält, beispielsweise ein blockiertes Polyisocyanat. Das Einbrennen der Beschichtung erfolgt im Allgemeinen bei Temperaturen von 90 bis 300°C.

EP 0 272 525 A2 beschreibt die Herstellung partieller Kondensationsprodukte aus einer filmbildenden Polycarboxylverbindung und einem Epoxidharz-Amin-Addukt. Die Kondensationsprodukte werden zur Formulierung von wasserverdünnbaren Lacken mit Vernetzungskomponenten wie Phenol-, Melamin-, Harnstoff-, Benzoguanamin- oder Glykolurilharzen kombiniert. Die Lackschichten sind ofentrocknend.

WO 95/26373 beschreibt wässrige Beschichtungszusammensetzungen für Dosen- oder Bandbeschichtungen, insbesondere für die Innenbeschichtung von Getränkedosen, die ein Epoxid-Amin-Addukt sowie ein Carboxylgruppen tragendes Vinylpolymer enthalten. Es können Vernetzungsmittel wie Aminoplasten, Phenolharze, Harnstoffharze oder blockierte Isocyanate enthalten sein. Die Beschichtungen werden typischerweise bei 200 - 300°C gehärtet.

EP 1 813 633 A1 betrifft ein kettenverlängertes Fettsäure-modifiziertes hydroxyfunktionelles Epoxid-Amin-Addukt ABC, das Urethangruppen enthält und Einheiten umfasst, die von Epoxidharzen A, Fettsäuren B und Aminen C abgeleitet sind, wobei das Addukt durch Addition von polyfunktionellem Isocyanat D an das Addukt ABC kettenverlängert ist.

EP 0 819 733 A2 offenbart Epoxidharz-Zusammensetzungen, die erhältlich sind durch Umsetzung von Epoxiden und Aminen und anschließender Umsetzung des resultierenden Epoxid-Amin-Addukts mit mehrfunktionellen Isocyanaten.

Bei der Beschichtung von Metallsubstraten ist es unter anderem ein wesentliches Ziel, einen guten Korrosionsschutz zu erreichen. Dies gilt beispielsweise sowohl bei der Automobil-Serienlackierung als auch bei der Automobil-Reparaturlackierung. Bei der Automobil-Serienlackierung kann ein ausreichender Korrosionsschutz üblicherweise durch Passivierung des Substrats, Aufbringen und Einbrennen von entsprechenden Korrosionsschutz-Beschichtungen wie z.B. Elektrotauchlackierungen und Primern sowie weiterer Beschichtungsmittel erzielt werden.

Die Automobil-Reparaturlackierung unterscheidet sich von der Automobilserienlackierung im Wesentlichen dadurch, dass zum einen die Lackierung nicht am Fließband unter entsprechenden industriellen Applikationsbedingungen hergestellt wird, und zum anderen dadurch, dass sie an einem fertigen Automobil mit all seinen Komponenten durchgeführt werden muss. Die Automobilreparaturlackierung erfolgt in der Regel mit handwerklichen Methoden durch manuelle Spritzapplikation bei Trocknungs- und Härtungsbedingungen, die üblicherweise 80°C nicht überschreiten. Höhere Temperaturen, wenn sie auch nur lokal auftreten, können Schäden durch Verformung oder Schmelzen von Kunststoffteilen, Verformung der Reifen oder irreversible Defekte an der Elektrik und elektronischen Ausrüstung der Fahrzeuge verursachen. Daraus folgt, dass für die Reparaturlackierung andere Beschichtungsstoffe benötigt werden als für die Serienlackierung. Insbesondere müssen die Beschichtungsmittel für eine Spritzapplikation geeignet sein und bereits bei Temperaturen unterhalb von 90°C vollständig oder im Wesentlichen vollständig aushärten. Dies ist bei den oben beschriebenen bekannten Beschichtungsmitteln nicht möglich, so dass sie nicht für die Automobil-Reparaturlackierung geeignet sind.

Der Korrosionsschutz stellt daher bei der Automobil-Reparaturlackierung eine besondere Herausforderung dar. Ausreichende Korrosionsschutzeigenschaften lassen sich in der Reparaturlackierung derzeit mit sogenannten Säureprimern (Washprimern) auf Basis von Polyvinylbutyral erzielen. Der Anteil an flüchtigen organischen Bestandteilen (VOC) liegt jedoch in diesen Washprimern mit etwa 700 g/L sehr hoch, was aus Gründen des Umweltschutzes und vor dem Hintergrund immer strengerer gesetzlicher Auflagen äußerst unerwünscht ist. Der hohe VOC-Wert beruht auf einem hohen Anteil organischer Lösemittel in den bekannten Korrosionsschutz-Washprimern. Guter Korrosionsschutz lässt sich

auch mit chromathaltigen Grundierungen erzielen. Dies ist jedoch aus Gründen des Umweltschutzes nicht mehr zeitgemäß. Mit den bisher bekannten, zeitgemäßen wässrigen Grundierungen für den Bereich der Reparaturlackierung lässt sich jedoch kein ausreichender Korrosionsschutz erzielen.

## Aufgabe

Aufgabe der vorliegenden Erfindung war es daher, ein Verfahren zur Beschichtung von Metallsubstraten bereitzustellen, das für die Automobilreparaturlackierung geeignet ist, das möglichst ohne Chromate und mit möglichst geringen Mengen an organischen Lösemitteln auskommt und mit dem gleichzeitig ein guter Korrosionsschutz erzielt werden kann.

Die resultierenden Beschichtungen sollten außerdem eine gute Haftung auf dem Untergrund und eine gute Zwischenschichthaftung zu weiteren Lackschichten aufweisen sowie zu einer hohen Steinschlagfestigkeit der Lackierung beitragen.

Das Verfahren soll nach Möglichkeit auch zur Lackierung von Kunststoffsubstraten entsprechend geeignet sein.

## Lösung der Aufgabe

Diese Aufgabe wird überraschenderweise durch den Gegenstand der unabhängigen Patentansprüche gelöst. Bevorzugte Ausführungsformen der Erfindung ergeben sich aus dem Gegenstand der abhängigen Patentansprüche.

Es wurde ein Verfahren zur Beschichtung eines gegebenenfalls vorbeschichteten Metall- oder Kunststoffsubstrats durch

(a) Aufbringen einer wässrigen Beschichtungszusammensetzung (W), deren Bestandteile frei oder im Wesentlichen frei von blockierten Isocyanatgruppen sind, die eine wässrige Dispersion eines Epoxid-Amin-Addukts enthält, welches ein Reaktionsprodukt aus mindestens einem Polyepoxid (P) und mindestens einem Amin (N) ist, und die ein oder mehrere unblockierte Polyisocyanate mit mehr als zwei Isocyanat-Gruppen als Vernetzungsmittel enthält, auf das Substrat,

(b) gegebenenfalls Aufbringen einer oder mehrerer weiterer Beschichtungszusammensetzungen und

(c) Härtung der Beschichtungszusammensetzung (W) und gegebenenfalls der weiteren Beschichtungszusammensetzung(en),

dadurch gekennzeichnet, dass die Härtung bei Temperaturen unterhalb von 90°C erfolgt, gefunden.

Bevorzugt handelt es sich bei dem Substrat um ein Metallsubstrat.

Das Metallsubstrat kann ein oder mehrere beliebige Metalle umfassen, wie beispielsweise Aluminium, Stahl, verzinkten Stahl, Legierungen von Aluminium, Zink, Eisen, Magnesium, Kupfer, Zinn, Silizium, Nickel und/oder weiterer Metalle. Vorzugsweise handelt es sich bei dem Metallsubstrat um ein Substrat aus Aluminium, Stahl oder verzinktem Stahl.

Als Kunststoffsubstrat kommen alle bekannten lackierbaren Kunststoffe in Betracht, wie beispielsweise PC (Polycarbonat), SMC (sheet moulding compounds), GFK (glasfaserverstärkter Kunststoff), PBT (Polybutylenterephthalat), ABS (AcrylnitrilButadien-Styrol), PUR (Polyurethan), CFK (kohlenstofffaserverstärkter Kunststoff) oder PET (Polyethylenterephthalat). Bei sehr schlecht zu lackierenden Kunststoffen wie beispielsweise PP/EPDM (Polypropylen/Ethylen-Propylen-Dien-Kautschuk) wird üblicherweise vorher ein entsprechender Kunststoff-Haftgrund aufgebracht.

Die Oberfläche des Metall- oder Kunststoffsubstrats kann vorbehandelt sein. Zur Vorbehandlung kommen alle für Metall- oder Kunststoffsubstrate üblichen Verfahren der Oberflächenvorbehandlung in Betracht, wie beispielsweise eine Reinigung durch Wischen, Schleifen, Polieren, Bürsten, Strahlen, thermisches Flammstrahlen, Beizen, Reinigen mit Lösemitteln und/oder wässrigen Reinigern, sowie eine Vorbehandlung durch Aktivieren (beispielsweise mit Titanphosphat oder mit anderen chemischen oder mechanischen Mitteln), Eloxieren, Dekapieren von Aluminiumoberflächen, Phosphatierung, Chromatierung, Aufbringen sonstiger anorganischer Konversionsschichten, und/oder Nachpassivierung.

Das Metall- oder Kunststoffsubstrat kann vorbeschichtet sein, beispielsweise mit einer Einschicht- oder Mehrschicht-Beschichtung. Insbesondere kann das Metall- oder Kunststoffsubstrat eine Altlackierung aufweisen. Die Vorbeschichtung, insbesondere die Altlackierung, kann beispielsweise eine Elektrotauchlackschicht, Grundierung, Füller, Basislack und/oder Klarlack umfassen. Die Altlackierung kann Fehlstellen aufweisen, an denen eine oder mehrere Schichten der Altlackierung nicht mehr oder nicht mehr vollständig vorhanden sind. Falls das Metall- oder Kunststoffsubstrat eine Altlackierung aufweist, so handelt es sich bei dem beschriebenen Verfahren insbesondere um ein Verfahren zur Reparaturlackierung.

Bei dem Metall- oder Kunststoffsubstrat kann es sich beispielsweise um ein Metallband, eine Fahrzeugkarosserie oder ein Teil einer Fahrzeugkarosserie oder um ein Haushaltsgerät oder ein Teil eines Haushaltsgeräts handeln. Bevorzugt handelt es sich bei dem Metall- oder Kunststoffsubstrat um ein Teil einer Automobilkarosserie.

Auf das Metall- oder Kunststoffsubstrat wird eine wässrige Beschichtungszusammensetzung (W) aufgebracht, deren Bestandteile frei oder im Wesentlichen frei von blockierten Isocyanatgruppen sind, die eine wässrige Dispersion eines Epoxid-Amin-Addukts wie in Anspruch 1 definiert enthält, und die ein oder mehrere unblockierte Polyisocyanate mit mehr als zwei Isocyanatgruppen als Vernetzungsmittel enthält.

Die Beschichtungszusammensetzung (W) ist wässrig. Dies bedeutet, dass die Beschichtungszusammensetzung (W) als Lösemittel Wasser enthält und einen demgegenüber nur untergeordneten Anteil von organischen Lösemitteln aufweisen kann. Der Anteil organischer Lösemittel beträgt vorzugsweise weniger als 30 Gew.-%, bevorzugt weniger als 20 Gew.-% und besonders bevorzugt weniger als 15 Gew.-%, jeweils bezogen auf die gesamte wässrige Beschichtungszusammensetzung (W).

Die wässrige Beschichtungszusammensetzung (W) weist vorteilhafterweise einen niedrigen Gehalt an flüchtigen organischen Substanzen (VOC, *volatile organic compounds*) auf. Der VOC-Wert der Beschichtungszusammensetzung berechnet sich nach folgender Formel:

$$VOC\ (g/L) = (mf - mw) / (vg - vw)$$

mf = Masse flüchtiger Anteile [g]
mw = Masse Wasser [g]
vg = Gesamtvolumen der Beschichtungszusammensetzung [L]
vw = Volumen Wasser [L].

Die Grenze zwischen flüchtig und nichtflüchtig ist für eine organische Verbindung folgendermaßen definiert: Eine organische Verbindung, die bei 293,15 K (20°C) oder unter den jeweiligen Verwendungsbedingungen einen Dampfdruck von 0,01 KPa oder mehr aufweist. Das Verfahren zur Bestimmung des VOC-Wertes ist ausführlich in der EN ISO 11890 : 2007 beschrieben.

Die wässrige Beschichtungszusammensetzung (W) weist vorzugsweise einen VOC-Wert von unter 450 g/L, bevorzugt unter 350 g/L, noch bevorzugter von unter 300 g/L, besonders bevorzugt von unter 250 g/L auf.

Die Bestandteile der wässrigen Beschichtungszusammensetzung (W) sind frei oder im Wesentlichen frei von blockierten Isocyanatgruppen. Unter "im Wesentlichen frei" wird verstanden, dass die wenigen eventuell vorhandenen blockierten Isocyanat-gruppen in einem so geringen Anteil vorhanden sind, dass keine nennenswerte Vernetzung der Bestandteile der wässrigen Beschichtungszusammensetzung (W) über die wenigen eventuell vorhandenen blockierten Isocyanatgruppen erfolgen kann. Unter den Bestandteilen der wässrigen Beschichtungszusammensetzung (W) werden sämtliche Bestandteile, insbesondere Bindemittel, Vernetzer und sonstige Zusatzstoffe, verstanden. Somit sind auch insbesondere das oder die Bindemittel sowie der oder die vorhandenen Vernetzer in der wässrigen Beschichtungszusammensetzung (W) frei oder im Wesentlichen frei von blockierten Isocyanat-gruppen.

Unter blockierten Isocyanatgruppen werden, wie allgemein üblich, Isocyanatgruppen verstanden, die mit einem Blockierungsmittel umgesetzt worden sind, so dass die gebildeten blockierten Isocyanatgruppen bei Raumtemperatur beispielsweise gegenüber Hydroxyl- und Aminogruppen beständig sind, jedoch bei erhöhten Temperaturen von etwa 90 - 300°C reagieren, da das Blockierungsmittel beim Einbrennen in diesem Temperaturbereich abgespalten wird und die Isocyanatgruppe wieder zur Reaktion zur Verfügung steht. Dimerisierte Isocyanatgruppen (Uretdione) und trimerisierte Isocyanatgruppen (Isocyanurate) zählen nicht zu den blockierten Isocyanatgruppen.

Die wässrige Beschichtungszusammensetzung (W) enthält eine wässrige Dispersion eines Epoxid-Amin-Addukts als Bindemittel. Unter einem Epoxid-Amin-Addukt wird ein Reaktionsprodukt aus mindestens einem Polyepoxid (P) und mindestens einem Amin (N) verstanden.

Unter Polyepoxiden (P) werden Verbindungen verstanden, die zwei oder mehr Epoxidgruppen im Molekül enthalten. Zur Herstellung der Epoxid-Amin-Addukte geeignete Polyepoxide (P) sind beispielsweise

- Polyepoxide mit einem zahlenmittleren Molekulargewicht von 200 bis 20000 g/mol.

Das zahlenmittlere Molekulargewicht wird durch GPC bestimmt.

- Polyepoxide mit einem Epoxid-Äquivalentgewicht von 100 bis 10000 g/eq. Das Epoxid-Äquivalentgewicht einer Verbindung [g/eq] ist der Quotient aus dem zahlenmittleren Molekulargewicht der Verbindung [g/mol] und der Anzahl der Epoxidgruppen pro Mol der Verbindung [eq/mol]. Das Epoxid-Äquivalentgewicht einer Verbindung gibt diejenige Masse der Verbindung in [g] an, die im statistischen Mittel eine Epoxygruppe (d.h. ein Epoxy-Äquivalent) enthält.

Weitere geeignete Polyepoxide (P) sind Verbindungen, die herstellbar sind durch Umsetzung von

(a) einer Diepoxidverbindung oder eines Gemisches von Diepoxidverbindungen mit einem Epoxid-Äquivalentgewicht unter 2000 g/eq mit
(b) einer unter den gegebenen Reaktionsbedingungen gegenüber Epoxidverbindungen monofunktionell reagierenden, eine Phenol- oder Thiolgruppe enthaltenden Verbindung oder eines Gemisches solcher Verbindungen,

wobei die Komponenten (a) und (b) in einem Molverhältnis von 10:1 bis 1:1, bevorzugt 4:1 bis 1,5:1 eingesetzt werden und die Umsetzung der Komponente (a) mit der Komponente (b) bei 100 bis 190°C gegebenenfalls in Anwesenheit eines Katalysators durchgeführt wird (vgl. DE 35 18 770).

Weitere geeignete Polyepoxide (P) sind Verbindungen, die herstellbar sind durch eine bei 100 bis 195 °C gegebenenfalls in Anwesenheit eines Katalysators durchgeführten, durch einen monofunktionell reagierenden Starter, der entweder eine alkoholischen OH-Gruppe, eine phenolische OH-Gruppe oder eine SH-Gruppe trägt, initiierten Polyaddition einer Diepoxidverbindung und/oder eines Gemisches von Diepoxidverbindungen, gegebenenfalls zusammen mit einer Monoepoxidverbindung, zu einem Epoxidharz, in dem Diepoxidverbindung und Starter in einem Molverhältnis von größer 2:1 bis 10:1 eingebaut sind (vgl. DE 35 18 732).

Polyepoxide, die zur Herstellung der besonders bevorzugten Polyepoxide (P) oder auch selbst als Polyepoxide (P) einsetzbar sind, sind beispielsweise aus Polyphenolen und Epihalohydrinen hergestellte Polyglycidylether von Polyphenolen. Als Polyphenole können z.B. ganz besonders bevorzugt Bisphenol A und Bisphenol F eingesetzt werden. Außerdem sind auch 4,4'-Dihydroxybenzophenon, Bis-(4-hydroxyphenyl)-1,1-ethan, Bis-(4-hydroxyphenyl)-1,1-isobutan, Bis-(4-hydroxy-tertiärbutylphenyl)-2,2-propan, Bis-(2-hydroxynaphthyl)-methan, 1,5-Dihydroxynaphthalin und phenolische Novolake geeignet. Weitere geeignete Polyepoxide sind Polyglycidylether von mehrwertigen Alkoholen, wie z.B. Ethylenglykol, Diethylenglykol, Triethylenglykol, 1,2-Propylenglykol, 1,4-Propylenglykol, 1,5-Pentandiol, 1,2,6-Hexantriol, Glycerin und Bis-(4-hydroxycyclohexyl)-2,2-propan sowie Neopentylglykol.

Das Polyepoxid (P) kann beispielsweise hergestellt werden, indem Bisphenol A, ein Bisphenol A - Diglycidylether und ein Polypropylenglykol-Glycidylether umgesetzt werden.

Es können auch Polyglycidylester von Polycarbonsäuren, wie z.B. Oxalsäure, Bernsteinsäure, Glutarsäure, Terephthalsäure, 2,6-Naphthalindicarbonsäure, dimerisierte Linolsäure eingesetzt werden. Typische Beispiele sind Glycidyladipat und Glycidylphthalat.

Ferner sind Hydantoinepoxide, epoxidiertes Polybutadien und Polyepoxidverbindungen geeignet, die man durch Epoxidierung einer olefinisch ungesättigten aliphatischen Verbindung erhält.

Die Polyepoxide (P) können gegebenenfalls modifiziert sein. Unter modifizierten Polyepoxiden werden Polyepoxide verstanden, in denen ein Teil der reaktionsfähigen Gruppen mit einer modifizierenden Verbindung umgesetzt worden ist. Ein Beispiel ist die Modifizierung eines Epoxidharzes mit Monophenol- oder -thiolverbindungen. Als weitere Beispiele für modifizierende Verbindungen werden genannt:

i) Carboxylgruppenhaltige Verbindungen wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z.B. Adipinsäure, Sebacinsäure, Isophthalsäure oder dimere Fettsäuren), Hydroxyalkylcarbonsäuren (z.B. Milchsäure, Dimethylolpropionsäure) sowie carboxylgruppenhaltige Polyester oder

ii) aminogruppenhaltige Verbindungen wie Diethylamin oder Ethylhexylamin oder Diamine mit sekundären Aminogruppen, z.B. N,N'-Dialkylalkylendiamine wie Dimethylethylendiamin, N,N'-Dialkyl-polyoxyalkylenamine wie N,N'-Dimethylpolyoxypropylendiamin, cyanalkylierte Alkylendiamine wie Bis-N,N'-Cyanethyl-ethylendiamin, cyanalkylierte Polyoxyalkylenamine wie Bis-N,N'-Cyanethyl-polyoxypropylendiamin, Polyaminoamide wie z.B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren, oder das Umsetzungsprodukt von einem Mol Diaminohexan mit zwei Molen Monoglycidylether oder Monoglycidylester, speziell Glycidylester $\alpha$-verzweigter Fettsäuren wie der Versaticsäure, oder

iii) hydroxylgruppenhaltige Verbindungen wie Neopentylglykol, Bis-ethoxyliertes Neopentylglykol, Hydroxypivalinsäureneopentylglykolester, Dimethylhydantoin-N,N'-diethanol, Hexandiol-1,6, Hexandiol-2,5; 1,4-Bis-(hydroxymethyl)cyclohexan), 1,1-Isopropyliden-bis-(p-phenoxi)-2-propanol, Trimethylolpropan, Pentaerythrit oder Aminoalkohole wie Triethanolamin, Methyldiethanolamin oder hydroxylgruppenhaltige Alkylketimine wie Aminomethylpropandiol-1,3-methyl-isobutylketimin oder Tris-(hydroxymethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder

iv) gesättigte oder ungesättigte Fettsäuremethylester, die in Gegenwart von Natriummethylat mit Hydroxylgruppen der Epoxidharze umgesetzt werden.

Zur Herstellung des Epoxid-Amin-Addukts können als Aminkomponente (N) primäre und/oder sekundäre Amine bzw. deren Salze und/oder Salze von tertiären Aminen verwendet werden.

Bevorzugt sollte das Amin eine in Wasser lösliche Verbindung sein. Beispiele solcher Amine sind Mono- und Dialkylamine, wie Methylamin, Ethylamin, Propylamin, Butylamin, Dimethylamin, Diethylamin, Dipropylamin, Methylbutylamin und dergleichen. Geeignet sind ebenfalls Alkanolamine, wie z.B. Methylethanolamin, Diethanolamin und dergleichen, sowie Aminoalkoxyalkohole, wie z.B. 2,2'-Aminoethoxyethanol. Ferner sind Dialkylaminoalkylamine, wie z.B. Dimethylaminoethylamin, Diethylaminopropylamin, Dimethylaminopropylamin und dergleichen geeignet. Bevorzugt werden Aminoalkoxyalkohole, wie z.B. 2,2'-Aminoethoxyethanol, sowie niedermolekulare Dialkylaminoalkylamine, wie N,N-Dimethylaminopropylamin, eingesetzt.

Polyamine mit primären und/oder sekundären Aminogruppen können in Form ihrer Ketimine mit den Epoxidgruppen umgesetzt werden. Die Ketimine werden aus den Polyaminen in bekannter Weise hergestellt.

Die Amine (N) können auch noch andere Gruppen als die Amingruppen enthalten, doch sollen diese die Umsetzung des Amins mit der Epoxidgruppe nicht stören und auch nicht zu einer Gelierung der Reaktionsmischung führen.

Das Epoxid-Amin-Addukt kann nach den üblichen und bekannten Methoden durch Umsetzung mindestens eines Polyepoxids mit mindestens einem Amin erhalten werden. Die Reaktion kann beispielsweise in einem organischen Lösemittel durchgeführt werden.

In der wässrigen Beschichtungszusammensetzung (W) liegt das Epoxid-Amin-Addukt als wässrige Dispersion vor. Die wässrige Dispersion ist kationisch stabilisiert. Die für die Wasserdispergierbarkeit des Epoxid-Amin-Addukts erforderlichen Ladungen können durch Protonisierung mit wasserlöslichen Säuren oder auch durch Umsetzung der Oxirangruppen mit Salzen eines tertiären Amins, beispielsweise Dimethylethanolamin, Triethylamin, Trimethylamin, Triisopropylamin und dergleichen, erzeugt werden. Vorzugsweise wird die Wasserdispergierbarkeit des Epoxid-Amin-Addukts durch den Zusatz von wasserlöslichen Säuren erhöht. Als wasserlösliche Säuren sind beispielsweise Ameisensäure, Essigsäure, Propionsäure, Valeriansäure, Borsäure, Phosphorsäure, unterphosphorige Säure oder Milchsäure geeignet. Die wässrige Dispersion des Epoxid-Amin-Addukts kann also beispielsweise dadurch hergestellt werden, dass die basischen Aminogruppen des Epoxid-Amin-Addukts ganz oder teilweise durch Neutralisation mit einer Säure in hydrophile Salzgruppen überführt werden, bevor oder während mit Wasser verdünnt und dispergiert wird. Bevorzugt wird Essigsäure eingesetzt. Bevorzugt wird Phosphorsäure eingesetzt.

Die wässrige Beschichtungszusammensetzung (W) enthält vorzugsweise 1 bis 60 Gew.-%, besonders bevorzugt 5 bis 40 Gew.-%, bezogen auf die gesamte wässrige Beschichtungszusammensetzung (W), des Epoxid-Amin-Addukts. Zur Berechnung des Gewichtsanteils des Epoxid-Amin-Addukts wird hierbei das Epoxid-Amin-Addukt als solches vor der Neutralisation mit einer Säure und vor dem Dispergieren in wässriger Lösung herangezogen, d.h. weder das Neutralisationsmittel noch die restlichen Bestandteile der Dispersion des Epoxid-Amin-Addukts gehen in die Berechnung des Gewichtsanteils an Epoxid-Amin-Addukt mit ein.

Die wässrige Beschichtungszusammensetzung (W) enthält ein oder mehrere unblockierte Polyisocyanate als Vernetzungsmittel.

Unter Vernetzungsmitteln werden im Sinne der vorliegenden Offenbarung die üblichen und bekannten Vernetzungsmittel verstanden, die üblicherweise zur Vernetzung von Epoxid-Amin-Addukten eingesetzt werden, wie insbesondere Phenolharze, Aminoplastharze (z.B. Melaminharze, Harnstoffharze, Benzoguanaminharze, Glykolurilharze) und (blockierte) Polyisocyanate.

Unter einem Polyisocyanat wird eine Verbindung mit mehr als zwei Isocyanatgruppen verstanden. Unter einem unblockierten Polyisocyanat wird ein Polyisocyanat verstanden, dessen Isocyanatgruppen frei vorliegen. Dagegen wird unter einem blockierten Polyisocyanat ein solches verstanden, dessen Isocyanatgruppen zumindest teilweise so blockiert vorliegen, dass das Blockierungsmittel erst bei erhöhten Temperaturen abgespalten wird.

Wie oben ausgeführt, ist die wässrige Beschichtungszusammensetzung (W) also frei oder im Wesentlichen frei von blockierten Polyisocyanaten als Vernetzungsmittel, und die Bestandteile der wässrigen Beschichtungszusammensetzung (W) sind frei oder im Wesentlichen frei von blockierten Isocyanatgruppen. Dagegen enthält die wässrige Beschichtungszusammensetzung (W) ein oder mehrere unblockierte Polyisocyanate als Vernetzungsmittel.

Geeignete unblockierte Polyisocyanate sind die üblichen und bekannten unblockierten Polyisocyanate, wie beispielsweise Hexamethylendiisocyanat (HDI), Isophorondiisocyanat (IPDI), 4,4'-Diphenylmethandiisocyanat (MDI) sowie deren Isomere und Homologe, wie beispielsweise Dimere (Uretdione) und Trimere (Isocyanurate).

Vorzugsweise enthält die wässrige Beschichtungszusammensetzung (W) 1 bis 30 Gew.-%, besonders bevorzugt 5 bis 20 Gew.-%, jeweils bezogen auf die gesamte wässrige Beschichtungszusammensetzung (W), des oder der unblockierten Polyisocyanate.

Die wässrige Beschichtungszusammensetzung (W) kann neben den vorstehend beschriebenen Bestandteilen noch eine oder mehrere weitere Komponenten enthalten. Beispielsweise können ein oder mehrere, von Epoxid-Amin-Addukten verschiedene Bindemittel und/oder ein oder mehrere Pigmente, Farbstoffe und/oder Hilfs- und Zusatzstoffe enthalten sein.

Geeignete Pigmente sind die in Beschichtungszusammensetzungen üblicherweise eingesetzten anorganischen und organischen Pigmente, wie beispielsweise Weißpigmente (z.B. Titandioxid, Zinkoxid, Zinksulfid, Bariumsulfat), Schwarzpigmente (z.B. Ruß, Spinellschwarz, organische Schwarzpigmente), anorganische Buntpigmente (z.B. Eisenoxide, Chromoxide, Mischphasenpigmente, Bleichromat, Bleimolybdat, Bismutvanadat, Cyaneisenblau, Ultramarin, Spinelle), organische Buntpigmente (z.B. Azopigmente, Metallkernpigmente, Triphenylmethanpigmente, indigoide Pigmente, Isoindoline, Isoindolinone, Anthrachinone, Chinacridone, Perylen, Diketopyrrolopyrrol, Pyrazolchinazolone, Chinophthalone, Dioxazine), Effektpigmente (z.B. Interferenzpigmente, Metalleffektpigmente), Korrosionsschutzpigmente (z.B. Zinkphosphat, Chromphosphat, Zink-/Aluminium-Phosphat, Zinkpulver).

Bevorzugt werden die in Grundierungen, Grundfüllern und Füllern für Metallbeschichtungen üblichen Pigmente eingesetzt. Dazu zählen insbesondere Titandioxid, Zinkoxid, Zinkphosphat, Eisenoxide und Ruß.

Geeignete Hilfs- und Zusatzstoffe sind die in Beschichtungszusammensetzungen üblicherweise eingesetzten Hilfs- und Zusatzstoffe, wie beispielsweise Füllstoffe (z.B. Silikate wie Talkum, Kaolin, Glimmer oder sonstige Calcium-, Aluminium- und/oder Natriumsilikate; Carbonate wie Kreide, Calcid, Marmor, Dolomit und gefällte Calciumcarbonate; Sulfate wie natürliches (Baryt, Schwerspat) oder synthetisches Bariumsulfat (Blanc fixe), Kieselsäuren wie Aerosil); Weichmacher, Tenside / Emulgatoren, Farbstoffe, Dispergiermittel, Netzmittel, Verlaufmittel, Entschäumer, Entlüfter, Rheologiehilfsmittel, Flammschutzmittel, Lichtschutzmittel wie UV-Absorber, Radikalfänger, Konservierungsmittel und Hydrophobierungsmittel.

Bevorzugt werden die in Grundierungen, Grundfüllern und Füllern für Metallbeschichtungen üblichen Hilfs- bzw. Zusatzstoffe eingesetzt. Dazu zählen insbesondere Füllstoffe wie Kieselsäuren, Talkum, Kaolin, Aluminiumsilikate, Bariumsulfat und Kreide.

Die wässrige Beschichtungszusammensetzung (W) kann insbesondere auch Phosphorsäure enthalten. Bevorzugt enthält die wässrige Beschichtungszusammensetzung (W) 0,1 bis 4,0 Gew.-%, besonders bevorzugt 0,5 bis 2,5 Gew.-%, bezogen auf die gesamte wässrige Beschichtungszusammensetzung (W), an Phosphorsäure.

Die wässrige Beschichtungszusammensetzung (W) kann mittels üblicher und gebräuchlicher Applikationsverfahren auf das Metall- oder Kunststoffsubstrat aufgebracht werden, beispielsweise durch Spritzen, Rakeln, Walzen, Tauchen, Streichen, Rollen, Sprühen oder Gießen. Bevorzugt wird die wässrige Beschichtungszusammensetzung (W) mittels Spritzen und/oder Sprühen auf das Substrat aufgebracht. In diesen Verfahren werden feine Tröpfchen der wässrigen Beschichtungszusammensetzung (W) erzeugt, die auf dem Substrat niedergeschlagen werden. Beim Spritzen erfolgt die Zerstäubung der wässrigen Beschichtungszusammensetzung (W) mittels Druckluft und/oder durch hohen Druck im Airless-Verfahren und/oder durch Zentrifugalkräfte (Hochrotationszerstäubung). Beim Sprühen erfolgt die Zerstäubung der wässrigen Beschichtungszusammensetzung (W) mittels elektrostatischer Kräfte.

Gegebenenfalls können vor oder nach der Härtung der wässrigen Beschichtungszusammensetzung (W) auf dem Substrat eine oder mehrere weitere Beschichtungszusammensetzungen auf die aufgetragene Schicht der wässrigen Beschichtungszusammensetzung (W) aufgetragen werden. Es kann sich hierbei beispielsweise um Füller, Basislacke und/oder Klarlacke handeln. Geeignet sind beispielsweise die zur Metall- oder Kunststoffbeschichtung üblichen Füller, Basislacke und Klarlacke. Bevorzugte Füller sind beispielsweise Zweikomponenten-Polyurethan-Füller. Bevorzugte Basislacke sind beispielsweise Wasserbasislacke. Bevorzugte Klarlacke sind beispielsweise Zweikomponenten-Polyurethan-Klarlacke. Allgemein werden solche Füller, Basislacke bzw. Klarlacke bevorzugt, die einen geringen VOC-Wert aufweisen.

Die noch nicht gehärtete Schicht der wässrigen Beschichtungszusammensetzung (W) kann vor dem Auftragen einer oder mehrerer weiterer Schichten abgelüftet und/oder vorgetrocknet werden. Beispielsweise kann eine Vortrocknung der noch nicht gehärteten Schicht der wässrigen Beschichtungszusammensetzung (W) bei Raumtemperatur für 5 bis 60 Minuten erfolgen, bevor eine weitere Schicht aufgetragen wird. Die Schicht der wässrigen Beschichtungszusammensetzung (W) und die mindestens eine weitere Schicht können anschließend gemeinsam gehärtet werden. Die Schicht der wässrigen Beschichtungszusammensetzung (W) kann aber auf dem Substrat auch zunächst gehärtet werden, bevor eventuelle weitere Schichten aufgetragen und anschließend separat von (W) gehärtet werden.

Die weitere(n) Beschichtungszusammensetzung(en) können mittels üblicher und gebräuchlicher Applikationsverfahren auf das Metall- oder Kunststoffsubstrat aufgebracht werden, beispielsweise durch Spritzen, Rakeln, Walzen, Tauchen, Streichen, Rollen, Sprühen oder Gießen. Bevorzugt werden die weiteren Beschichtungszusammensetzungen mittels Spritzen und/oder Sprühen aufgebracht.

Die wässrige Beschichtungszusammensetzung (W) kann beispielsweise als Grundierung, Grundfüller oder Füller eingesetzt werden. Unter einer Grundierung wird eine Beschichtung verstanden, die sich unmittelbar auf dem gegebenenfalls vorbehandelten Metall- oder Kunststoffsubstrat oder der Altlackierung befindet und eine Trockenfilmschichtdicke von maximal 30 μm aufweist. Grundierungen zeichnen sich im Allgemeinen durch gute Haftungs- und Korrosionsschutzeigenschaften aus. Unter einem Füller wird eine Beschichtung verstanden, die sich entweder unmittelbar auf dem gegebenenfalls vorbehandelten Metall- oder Kunststoffsubstrat bzw. der Altlackierung, oder aber auf einer zuvor aufgebrachten Grundierung befindet, einen üblichen Anteil an Füllstoffen enthält und eine Trockenfilmschichtdicke von 30 - 300 μm aufweist. Füller zeichnen sich im Allgemeinen durch eine gute Abdeckung von Untergrundunebenheiten und Steinschlagfestigkeit sowie eine gute und schnelle Schleifbarkeit (bei Schleiffüllern) aus. Der Füller muss nicht zwingend geschliffen werden (Nass-in-Nass-Füller, Non-sanding Füller). Ein Grundfüller vereint die Eigenschaften von Grundierung und Füller. Er kann entweder unmittelbar auf das gegebenenfalls vorbehandelte Metall- oder Kunststoffsubstrat bzw. die Altlackierung, oder auf eine zuvor aufgebrachte Grundierung in einer Trockenfilmschichtdicke von bis zu 300 μm aufgetragen werden und zeichnet sich im Allgemeinen durch gute Haftungs- und Korrosionsschutzeigenschaften, gute Schleifbarkeit (bei Schleifgrundfüllern) sowie Steinschlagfestigkeit aus.

Wird die wässrige Beschichtungszusammensetzung (W) als Grundierung eingesetzt, so wird die wässrige Beschichtungszusammensetzung (W) bevorzugt in einer Trockenfilmschichtdicke von 5 - 30 μm, besonders bevorzugt von 10 - 20 μm auf das Substrat aufgetragen. Bevorzugt wird nach einem Ablüften von beispielsweise 10 - 40 min bei Raumtemperatur ein Füller "nass-in-nass" auf die noch nicht gehärtete Grundierung aufgetragen. Grundierung und Füller werden dann bevorzugt gemeinsam gehärtet.

Wenn die wässrige Beschichtungszusammensetzung (W) als Grundierung oder Grundfüller eingesetzt wird, so enthält sie bevorzugt Phosphorsäure als weitere Komponente. Der Gehalt an Phosphorsäure beträgt in diesem Fall vorzugsweise 0,1 bis 4,0 Gew.-%, besonders bevorzugt 0,5 bis 2,5 Gew.-%, jeweils bezogen auf die gesamte wässrige Beschichtungszusammensetzung (W).

Wird die wässrige Beschichtungszusammensetzung (W) als Füller oder Grundfüller eingesetzt, so wird die wässrige Beschichtungszusammensetzung (W) bevorzugt in einer Trockenfilmschichtdicke von 20 - 200 μm, besonders bevorzugt von 40 - 100 μm auf das Substrat aufgetragen. Bevorzugt wird der Füller oder Grundfüller abgelüftet, gehärtet und optional weiter behandelt (z.B. geschliffen), bevor eventuelle weitere Schichten wie beispielsweise Basislack und/oder Klarlack aufgetragen werden. Auf den Füller oder Grundfüller kann jedoch auch eine weitere Beschichtungszusammensetzung, beispielsweise ein Basislack, ohne vorheriges Härten oder Schleifen aufgetragen werden (Nass-in-Nass-Füller, Nonsanding Füller).

Wird auf einen solchen Grundfüller keine weitere Beschichtungszusammensetzung mehr aufgetragen, so bildet der Grundfüller die oberste Schicht der resultierenden Beschichtung und fungiert somit als Decklack. Auf diese Weise ist es zum Beispiel möglich, einen Decklack direkt auf das Metallsubstrat aufzutragen.

Auch transparente Lackierungen für spezielle Anwendungen, wie beispielsweise den Schutz von Aluminiumfelgen, sind auf diese Weise möglich. Sie können ggf. mit einem Klarlack überlackiert werden.

Wenn die wässrige Beschichtungszusammensetzung (W) als Füller, Grundfüller und/ oder Decklack eingesetzt wird, so enthält sie mindestens ein unblockiertes Polyisocyanat als Vernetzungsmittel. In diesem Fall wird das mindestens eine Polyisocyanat der wässrigen Beschichtungszusammensetzung (W) erst kurz vor der Applikation zugegeben.

Die wässrige Beschichtungszusammensetzung (W) kann als Grundierung, Grundfüller, Füller, Basislack oder Decklack eingesetzt werden. Durch die Zugabe entsprechender Pigmente können neben transparenten Lacken auch weiße, schwarze oder andersfarbige Lacke erhalten werden. Beispielsweise kann die wässrige Beschichtungszusammensetzung (W) auch als weißer, schwarzer, andersfarbiger oder transparenter Grundfüller, Basislack und/oder Decklack sowie als Grundfüller, Basislack und/oder Decklack mit Metallic-Effekt eingesetzt werden.

Die Härtung der wässrigen Beschichtungszusammensetzung (W) kann physikalisch und/oder chemisch erfolgen. Unter einer physikalischen Härtung wird ein Trocknen der Beschichtungszusammensetzung verstanden, das durch das Verdunsten von Wasser und gegebenenfalls von weiteren flüchtigen Bestandteilen der Beschichtungszusammensetzung bedingt ist. Dagegen finden bei der chemischen Härtung chemische Vernetzungsreaktionen zwischen den Bestandteilen der Beschichtungszusammensetzung statt. Enthält die wässrige Beschichtungszusammensetzung (W) mindestens ein unblockiertes Polyisocyanat als Vernetzungsmittel, so kann die Härtung chemisch erfolgen.

Es ist erfindungswesentlich, dass die Härtung der wässrigen Beschichtungszusammensetzung (W) bei Temperaturen unterhalb von 90°C erfolgen kann und erfolgt. Hierdurch wird insbesondere der Einsatz zur Automobilreparaturlackierung ermöglicht, bei der keine höheren Temperaturen angewandt werden dürfen, um Schäden am Fahrzeug zu vermeiden. Eine vollständige oder im Wesentlichen vollständige Härtung der wässrigen Beschichtungszusammensetzung (W) kann nach dem beschriebenen Verfahren bereits bei Temperaturen unterhalb von 90°C erzielt werden. Unter "im Wesentlichen vollständig" wird verstanden, dass die Aushärtung der wässrigen Beschichtungszusammensetzung (W) nach dem Härten bei einer Temperatur von weniger als 90°C größtenteils abgeschlossen ist.

Die wässrige Beschichtungszusammensetzung (W) ist prinzipiell auch bei Temperaturen von 90°C und darüber härtbar. In dem erfindungsgemäßen Verfahren erfolgt die Härtung der wässrigen Beschichtungszusammensetzung (W) jedoch bei Temperaturen unterhalb von 90°C. Bevorzugt erfolgt die Härtung der wässrigen Beschichtungszusammensetzung (W) bei Temperaturen unterhalb von 80°C, noch bevorzugter bei Temperaturen unterhalb von 70°C und besonders bevorzugt bei Temperaturen von 60°C oder darunter. Die Härtung kann nach den üblichen und bekannten Verfahren erfolgen, beispielsweise in einer geeigneten Trockenkabine und/oder unterstützt durch Infrarotstrahler. Bevorzugt kann die Härtung für eine Dauer von 2 Stunden oder weniger bei einer Temperatur von 60 - 70°C durchgeführt werden, besonders bevorzugt für 20 - 40 Minuten bei 50 - 70°C.

Die wässrige Beschichtungszusammensetzung (W) weist vorzugsweise einen Festkörper von 5 bis 80 Gew.-%, bevorzugt von 20 bis 70 Gew.-%, und besonders bevorzugt von 30 bis 60 Gew.-%, jeweils bezogen auf die gesamte wässrige Beschichtungszusammensetzung (W), auf. Der Festkörper wird nach DIN EN ISO 3251 : 2008 bei einer Einwaage von 1,0 g nach einer Trocknung bei 80°C für 120 Minuten bestimmt.

Des Weiteren wurde eine Beschichtung gefunden, die nach dem oben beschriebenen Verfahren erhältlich ist. Bevorzugte Ausführungsformen der Beschichtung können nach den oben als bevorzugt genannten Ausführungsformen des Verfahrens erhalten werden.

Des weiteren wurde ein Substrat gefunden, das mit einer nach dem oben beschriebenen Verfahren erhältlichen Beschichtung beschichtet ist. Bevorzugte Ausführungsformen des Substrats können nach den oben als bevorzugt genannten Ausführungsformen des Verfahrens erhalten werden.

Des Weiteren wurde eine wässrige Zweikomponenten-Beschichtungszusammensetzung gefunden, deren Bestandteile frei oder im Wesentlichen frei von blockierten Isocyanatgruppen sind, und die eine Komponente (A), die eine wässrige Dispersion eines Epoxid-Amin-Addukts enthält, welches ein Reaktionsprodukts aus mindestens einem Polyepoxid (P) und mindestens einem Amin (N) ist, und eine Komponente (B) umfasst, wobei die Komponente (B) mindestens ein unblockiertes Polyisocyanat mit mehr als zwei Isocyanatgruppen als Vernetzungsmittel enthält. Unter einer Zweikomponenten-Beschichtungszusammensetzung wird eine Beschichtungszusammensetzung verstanden, die zwei oder mehr Komponenten umfasst, welche getrennt voneinander gelagert und erst kurz vor der Applikation miteinander vermischt werden. Zur Definition der einzelnen Bestandteile der Komponenten gelten die in der obigen Beschreibung des Verfahrens gegebenen Erläuterungen.

Das oben beschriebene Verfahren benötigt nur niedrige Härtungstemperaturen und ist daher insbesondere für die Automobil-Reparaturlackierung geeignet. Es kann jedoch auch zu weiteren Zwecken wie z.B. der industriellen Lackierung von Metallblechen für verschiedene Ziele eingesetzt werden. Da eine wässrige Beschichtungszusammensetzung eingesetzt wird, können die benötigten Mengen an organischen Lösemitteln vorteilhafterweise stark reduziert werden, so dass auch strenge gesetzliche Umweltschutzauflagen zur Lösemittelemission erfüllt werden können. Gleichzeitig kann ein ausreichender Korrosionsschutz, eine gute Haftung auf dem Substrat und eine gute Zwischenschichthaftung zu weiteren Lackschichten sowie eine gute Steinschlagfestigkeit der Beschichtung erzielt werden. Die Kombination dieser Merkmale (niedrige Härtungstemperatur, geringer Gehalt an organischen Lösemitteln und gute Eigenschaften der resultierenden Beschichtung hinsichtlich Korrosionsschutz, Haftung und Steinschlagfestigkeit) konnte durch die Verfahren des Stands der Technik bisher nicht erzielt werden.

Im Folgenden wird die Erfindung durch Beispiele näher erläutert, ohne sie darauf zu beschränken.

**Beispiele**

Bei den Mengenangaben handelt es sich um Gewichtsteile, falls nichts anderes angegeben ist.

**1. Grundierungen, Grundfüller oder Füller in Mehrschichtaufbauten mit zusätzlichem Basislack und Klarlack**

Es wurde die Mischung 1 durch Vermischen der Bestandteile nach Tabelle 1 für 15 Minuten in einem Dissolver sowie anschließendes Dispergieren für 30 Minuten in einer Rührwerksmühle hergestellt.

| Tabelle 1 | Mischung 1 |
|---|---|
| Epoxid-Amin-Addukt (I), 63%ig in Butylglykol/Wasser/Eisessig | 24,2 |
| VE-Wasser | 29,8 |
| Phosphorsäure 8,5 % in Wasser | 2,0 |
| Aerosil R 972 | 1,0 |
| Blanc Fix Plv. N | 10,8 |
| Titandioxid (Tiona 595) | 10,0 |
| Talkum (Luzenac 10 MO) | 8,0 |
| Zinkphosphat (PZ 10) | 6,0 |

(fortgesetzt)

| Tabelle 1 | Mischung 1 |
|---|---|
| Bayferrox 3910 | 3,0 |
| Bayferrox 130 BM | 0,1 |
| Flammruss (Flamm 101) | 0,1 |
| Butylglykol | 5 |

Bei dem Epoxid-Amin-Addukt (I) in Tabelle 1 handelt es sich um das in Beispiel 3 hergestellte Reaktionsprodukt (Epoxid-Amin-Addukt, 63%ig in Butylglykol/Wasser/ Eisessig).

**Einstellung von Füller / Grundfüller / Grundierung vor der Spritzapplikation**

Vor der Spritzapplikation wurden zu 100 Teilen der Mischung 1 noch 15 Teile verdünnter Phosphorsäure (8,5 % in VE-Wasser) zugegeben, wie in Tabelle 2 angegeben. Es resultierte die Mischung 2.

| Tabelle 2 | Mischung 2 |
|---|---|
| Mischung 1 | 100 |
| Phosphorsäure 8,5% | 15 |

Anschließend wurden 115 Teile der Mischung 2 mit 10 Teilen eines Polyisocyanat-Härters (SC20-030F, Hexamethylendiisocyanat-Trimerisat, 78%ig in Butylacetat/ Xylol) gemischt und anschließend mit 12,5 Teilen VE-Wasser auf Spritzviskosität (65 Sek. ISO 4 / EN ISO 2431) eingestellt.

Das erhaltene Gemisch wurde als Grundierung, als Grundfüller, als Nass-in-Nass-Füller sowie als Schleiffüller wie im Folgenden beschrieben eingesetzt.

**1.1 Applikation als Grundierung in Kombination mit einem konventionellen Schleiffüller**

Die Grundierung wurde jeweils auf Substrate aus Aluminium, Stahl, verzinktem Stahl und auf Kunststoff (GFK) aufgebracht. Die Substrate wurden vor der Applikation geschliffen und nachgereinigt. Die Applikation erfolgte mittels Spritzauftrag in einer Trockenschichtdicke von etwa 10 $\mu$m. Die Schicht wurde auf dem Substrat für 30 min bei Raumtemperatur abgelüftet und anschließend ein 2K-Polyurethan-Füller in einer Schichtdicke von etwa 60 $\mu$m aufgetragen. Grundierung und Füller wurden gemeinsam für 30 min bei 60°C gehärtet.

Nach dem Schleifen der gehärteten Filleroberfläche wurde ein handelsüblicher Wasserbasislack in einer Schichtdicke von ca. 10 $\mu$m aufgetragen. Nach dem Ablüften von 20 Minuten wurde darauf "nass-in-nass" ein handelsüblicher 2K-Polyurethan-Klarlack in einer Schichtdicke von etwa 60 $\mu$m aufgetragen. Wasserbasislack und Klarlack wurden gemeinsam für 30 min bei 60°C gehärtet.

**1.2 Applikation als Grundfüller**

Der Grundfüller wurde jeweils auf Substrate aus Aluminium, Stahl, verzinktem Stahl und auf Kunststoff (GFK) aufgebracht Die Substrate wurden vor der Applikation geschliffen und nachgereinigt . Die Applikation erfolgte mittels Spritzauftrag in einer Trockenschichtdicke von etwa 60 $\mu$m. Die Schicht wurde auf dem Substrat für 30 min bei Raumtemperatur abgelüftet und für 30 min bei 60°C gehärtet. Nach dem Abkühlen wurde der Grundfüller geschliffen und ein handelsüblicher Wasserbasislack in einer Schichtdicke von ca. 10 $\mu$m aufgetragen. Nach dem Ablüften von 20 Minuten wurde darauf "nass-in-nass" ein handelsüblicher 2K-Polyurethan-Klarlack in einer Schichtdicke von etwa 60 $\mu$m aufgetragen. Wasserbasislack und Klarlack wurden gemeinsam für 30 min bei 60°C gehärtet.

**1.3 Applikation als Nass-in-Nass (Nonsanding) Füller**

Der wässrige Füller wurde auf einem mit KTL beschichtetem Stahlblech (angeschliffen und gereinigt) in einer Schichtdicke von ca. 40 $\mu$m Trockenschicht aufgetragen.

Nach Ablüften von 30 Minuten bei Raumtemperatur und anschließendem Härten für 30 Minuten bei 60°C wurde ein handelsüblicher Wasserbasislack in einer Schichtdicke von ca. 10 $\mu$m aufgetragen und nach Ablüften von 20 Minuten darauf "nass-in-nass" ein handelsüblicher 2K-Polyurethan-Klarlack in einer Schichtdicke von etwa 60 μm aufgetragen. Der Aufbau wurde für 30 min bei 60°C gehärtet.

### 1.4 Applikation als Schleiffüller

Der wässrige Füller wurde auf einem mit KTL beschichtetem Stahlblech (angeschliffen und gereinigt) in einer Schichtdicke von ca. 60 μm Trockenschicht aufgetragen.

Der Füller wurde nach dem Ablüften von 30 Minuten bei Raumtemperatur im Ofen bei 60°C 30 Minuten gehärtet. Nach dem Abkühlen wurde der Füller mit handelsüblichem Schleifpapier geschliffen. Nach anschließender Reinigung wurde ein handelsüblicher Wasserbasislack in einer Schichtdicke von ca. 10 μm aufgetragen und nach Ablüften von 20 Minuten darauf "nass-in-nass" ein handelsüblicher 2K-Polyurethan-Klarlack in einer Schichtdicke von etwa 60 μm aufgetragen. Wasserbasislack und Klarlack wurden gemeinsam für 30 min bei 60°C gehärtet.

Die Eigenschaften der resultierenden Beschichtungen wurden nach einer Alterung von 7 Tagen bei Raumtemperatur wie folgt geprüft.

### Alle Substrate

- Haftungsprüfung mit dem Gitterschnittgerät (DIN EN ISO 2409) und anschließendem Tesaabriss (Tesaband Fa. Beiersdorf, Tesa 4651)

- Kratzprobe nach MB (PBO DC 371)

- Steinschlagprüfung (DIN 55996-1)

Die angegebenen Kennwerte sind wie folgt definiert:

Kennwert 0 = ausgezeichnet

Kennwert 1 = sehr gut

Kennwert 2 = gut.

| Tabelle 3 | | | |
|---|---|---|---|
| Aufbau | Gitterschnitt | Kratzprobe | Steinschlag |
| 1.1 auf Stahl | Kennwert 0 | Kennwert 1 | Kennwert 2 |
| 1.1 auf verzinktem Stahl | Kennwert 0 | Kennwert 1 | Kennwert 2 |
| 1.1 auf Aluminium | Kennwert 0 | Kennwert 1 | Kennwert 2 |
| 1.1 auf Kunststoff | Kennwert 0 | Kennwert 1 | Kennwert 2 |
| 1.2 auf Stahl | Kennwert 0 | Kennwert 0 | Kennwert 1,5 |
| 1.2 auf verzinktem Stahl | Kennwert 0 | Kennwert 0 | Kennwert 1,5 |
| 1.2 auf Aluminium | Kennwert 0 | Kennwert 0 | Kennwert 1,5 |
| 1.2 auf Kunststoff | Kennwert 0 | Kennwert 1 | Kennwert 1,5 |
| 1.3 auf KTL | Kennwert 0 | Kennwert 0 | Kennwert 1,5 |
| 1.4 auf KTL | Kennwert 0 | Kennwert 0 | Kennwert 1,5 |

Die Ergebnisse in Tabelle 3 zeigen, dass die Beschichtungen nach 1.1, 1.2, 1.3 und 1.4 auf verschiedenen Substraten eine ausgezeichnete Haftung, auch in der Kratzprobe, und eine gute Steinschlagfestigkeit aufweisen.

Des Weiteren wurde die Korrosionsschutzwirkung auf Stahl, verzinktem Stahl und Aluminium der resultierenden Beschichtungen von 1.1 und 1.2 nach einer Alterung von 7 Tagen bei Raumtemperatur mittels des Salzsprühtests nach DIN 50021 (480 h; für Stahl und verzinkten Stahl: pH 6,5 - 7,2; für Aluminium: pH 3,1 - 3,3) ermittelt. Die Probebleche wurden dazu mit einem Ritzstichel der Firma Erichsen, Typ 463, verletzt. Die Ergebnisse der Korrosionsschutzprüfungen zeigt Tabelle 4 in Form der sichtbaren Unterwanderung am Ritz [mm].

| Tabelle 4 | Aluminium | verzinkter Stahl | Stahl |
|---|---|---|---|
| Beschichtungen 1.1 | 0,4 | 1,8 | 2,5 |
| Beschichtungen 1.2 | 0 | 2,2 | 3.0 |

Die Ergebnisse in Tabelle 4 zeigen, dass die Beschichtungen der Aufbauten 1.1 und 1.2 einen sehr guten Korrosionsschutz auf allen drei Substraten vermitteln.

**2. Basislacke, Decklacke**

**2.1 Farbton RAL 9010 (weiß)**

Es wurde die Mischung W1 durch Vermischen der Bestandteile nach Tabelle 5 für 15 Minuten in einem Dissolver sowie anschließendes Dispergieren für 45 Minuten in einer Rührwerksmühle hergestellt.

| Tabelle 5 | Mischung W1 |
|---|---|
| Epoxid-Amin-Addukt (I), 63%ig in Butylglykol/Wasser/Eisessig | 25 |
| VE-Wasser | 25 |
| Phosphorsäure 8,5 % in Wasser | 4 |
| Aerosil R 972 | 0,7 |
| Titandioxid (Tiona 595) | 20,0 |
| Bayferrox 3920 | 0,06 |
| Flammruss (Flamm 101) | 0,001 |
| Blanc Fix Plv. N | 12,939 |
| Zinkphosphat (PZ 20) | 6,0 |
| Butylglykol | 5 |
| Tinuvin 5941 R | 1 |
| Byk 331 | 0,3 |

Bei dem Epoxid-Amin-Addukt (I) in Tabelle 5 handelt es sich um das in Beispiel 3 hergestellte Reaktionsprodukt (Epoxid-Amin-Addukt, 63%ig in Butylglykol/ Wasser/ Eisessig).
Vor der Spritzapplikation wurden zu 100 Teilen der Mischung W1 noch 10 Teile verdünnter Phosphorsäure (8,5 % in VE-Wasser) zugegeben, wie in Tabelle 6 angegeben. Es resultierte die Mischung W2.

| Tabelle 6 | Mischung W2 |
|---|---|
| Mischung W1 | 100 |
| Phosphorsäure 8,5 % | 10 |

Anschließend wurden 110 Teile der Mischung W2 mit 20 Teilen eines Polyisocyanat-Härters (Desmodur N 3600, Hexamethylendiisocyanat-Trimerisat, 78%) gemischt und anschließend mit 15 Teilen VE-Wasser auf Spritzviskosität (20 Sek. ISO 4 / EN ISO 2431) eingestellt.
Das erhaltene Gemisch wies die folgenden Kennzahlen auf:

- nichtflüchtiger Anteil (Festkörper)    49,4 Gew.-%
- VOC                                    285 g/l

(fortgesetzt)

| | |
|---|---|
| - pH-Wert | 5,0 |

Das erhaltene Gemisch wurde

1.) als weißer Grundfüller ohne weiteren Schichtaufbau (d.h. als weißer Decklack) sowie

2.) als weißer Grundfüller unter einem Klarlack wie im Folgenden beschrieben eingesetzt.

Substrate: Aluminium, Stahl, verzinkter Stahl jeweils geschliffen und nachgereinigt
Aufbau 1.) 2 Spritzgänge mit 5 min Zwischenablüftung, Schichtdicke ca. 50 - 60 $\mu$m,
Härtung 30 min bei 60°C
Aufbau 2.) 2 Spritzgänge mit 5 min Zwischenablüftung, Schichtdicke ca. 50 - 60 $\mu$m,
Härtung 30 min bei 60°C
Überlackieren mit handelsüblichem 2K-Klarlack
Härtung 30 min bei 60°C

Die so erhaltenen Aufbauten (Beschichtungen) zeigten gute Verarbeitung, gute Haftung und guten Steinschlagschutz auf allen drei Substraten.

**2.2 Klarlack**

Es wurde die Mischung K1 durch Vermischen der Bestandteile nach Tabelle 7 für 10 Minuten in einem Dissolver hergestellt.

| Tabelle 7 | Mischung K1 |
|---|---|
| Epoxid-Amin-Addukt (I), 63%ig in Butylglykol/Wasser/Eisessig | 44 |
| VE-Wasser | 47,6 |
| Phosphorsäure 8,5 % in Wasser | 2,5 |
| Butylglykol | 4,6 |
| Tinuvin 59-41 R | 1 |
| Byk 331 | 0,3 |

Bei dem Epoxid-Amin-Addukt (I) in Tabelle 7 handelt es sich um das in Beispiel 3 hergestellte Reaktionsprodukt (Epoxid-Amin-Addukt, 63%ig in Butylglykol/ Wasser/ Eisessig).
Vor der Spritzapplikation wurden zu 100 Teilen der Mischung K1 noch 10 Teile verdünnter Phosphorsäure (8,5 % in VE-Wasser) zugegeben, wie in Tabelle 8 angegeben. Es resultierte die Mischung K2.

| Tabelle 8 | Mischung K2 |
|---|---|
| Mischung K1 | 100 |
| Phosphorsäure 8,5 % | 10 |

Anschließend wurden 110 Teile der Mischung K2 mit 20 Teilen eines Polyisocyanat-Härters (Desmodur N 3600, Hexamethylendiisocyanat-Trimerisat, 78%) gemischt und anschließend mit 12 Teilen VE-Wasser auf Spritzviskosität (20 Sek. ISO 4 / EN ISO 2431) eingestellt.
Das erhaltene Gemisch wies die folgenden Kennzahlen auf:

| | |
|---|---|
| - nichtflüchtiger Anteil (Festkörper) | 31 Gew.-% |
| - VOC | 290 g/l |
| - pH-Wert | 5,0 |

Das erhaltene Gemisch wurde

1.) als klarer Grundfüller ohne weiteren Schichtaufbau (d.h. als klarer Decklack) sowie
2.) als klarer Grundfüller unter einem Klarlack wie im Folgenden beschrieben eingesetzt.

Substrate: Aluminium, Stahl, verzinkter Stahl jeweils geschliffen und nachgereinigt
Aufbau 1.) 2 Spritzgänge mit 5 min Zwischenablüftung, Schichtdicke ca. 30 - 40 $\mu$m,
Härtung 30 min bei 60°C
Aufbau 2.) 2 Spritzgänge mit 5 min Zwischenablüftung, Schichtdicke ca. 30 - 40 $\mu$m,
Härtung 30 min bei 60°C
Überlackieren mit handelsüblichem 2K-Klarlack
Härtung 30 min bei 60°C

Die so erhaltenen Aufbauten (Beschichtungen) zeigten sehr gute Haftung auf allen drei Substraten.

**2.3 Farbton Silber-Metallic**

Es wurde die Mischung M1 durch Vermischen der Bestandteile nach Tabelle 9 für 10 Minuten in einem Dissolver hergestellt.

| Tabelle 9 | Mischung M1 |
|---|---|
| Epoxid-Amin-Addukt (I), 63%ig in Butylglykol/Wasser/Eisessig | 39 |
| Phosphorsäure 8,5 % in Wasser | 2,5 |
| Tinuvin 59-41 R | 1 |
| Byk 331 | 0,3 |
| Butylglykol | 4,6 |
| Alu Stapa Hydrolux 8154, 65% | 10 |

Bei dem Epoxid-Amin-Addukt (I) in Tabelle 9 handelt es sich um das in Beispiel 3 hergestellte Reaktionsprodukt (Epoxid-Amin-Addukt, 63%ig in Butylglykol/ Wasser/ Eisessig).

Unter Rühren wurden der Mischung M1 nun 42,6 Teile VE-Wasser hinzugegeben. Zu den 100 Teilen der entstandenen Mischung wurden 10 Teile verdünnter Phosphorsäure (8,5 % in VE-Wasser) zugegeben. Es resultierte die Mischung M2.

Anschließend wurden 110 Teile der Mischung M2 mit 20 Teilen eines Polyisocyanat-Härters (Desmodur N 3600, Hexamethylendiisocyanat-Trimerisat, 78%) gemischt und anschließend mit 12 Teilen VE-Wasser auf Spritzviskosität (20 Sek. ISO 4 / EN ISO 2431) eingestellt.

Das erhaltene Gemisch wurde

1.) als Metallic-Lack ohne weiteren Schichtaufbau (d.h. als Metallic-Decklack) sowie
2.) als Metallic-Lack unter einem Klarlack wie im Folgenden beschrieben eingesetzt.

Substrate: Aluminium, Stahl, verzinkter Stahl
jeweils geschliffen und nachgereinigt
Aufbau 1.) 2 Spritzgänge mit 5 min Zwischenablüftung und 1 Nebelgang zum Effektangleich, Schichtdicke ca.
30 - 40 $\mu$m,
Härtung 30 min bei 60°C
Aufbau 2.) 2 Spritzgänge mit 5 min Zwischenablüftung und 1 Nebelgang zum Effektangleich, Schichtdicke ca.
30 - 40 $\mu$m,
Härtung 30 min bei 60°C
Überlackieren mit handelsüblichem 2K-Klarlack
Härtung 30 min bei 60°C

Der Metallic-Lack ließ sich hervorragend verarbeiten. Insbesondere die Spritznebelaufnahme, die Substratbenetzung und der Verlauf waren ausgezeichnet. Die so erhaltenen Aufbauten (Beschichtungen) zeigten einen guten Metall-Effekt, gute Haftung und guten Steinschlagschutz auf allen drei Substraten.

**2.4 Farbton VWL Y 3D (tornadorot)**

Es wurde die Mischung R1 durch Vermischen der Bestandteile nach Tabelle 10 für 15 Minuten in einem Dissolver sowie anschließendes Dispergieren für 120 Minuten in einer Rührwerksmühle hergestellt.

| Tabelle 10 | Mischung R1 |
|---|---|
| Epoxid-Amin-Addukt (I), 63%ig in Butylglykol/Wasser/Eisessig | 27,29 |
| VE-Wasser | 30 |
| Phosphorsäure 8,5 % in Wasser | 5 |
| Butylglykol | 5 |
| Irgazin DPP rot BO | 9 |
| Quindoviolett RV 6902/R | 1,6 |
| Chromophtalrot A2B | 0,8 |
| Novopermorange HL-70 | 0,8 |
| Farbruß FW-2 | 0,01 |
| Titanrutil 2310 | 0,8 |
| Aerosil R 972 | 0,7 |
| Blanc Fix Plv. N | 13 |
| Zinkphosphat (PZ 20) | 6,0 |

Bei dem Epoxid-Amin-Addukt (I) in Tabelle 10 handelt es sich um das in Beispiel 3 hergestellte Reaktionsprodukt (Epoxid-Amin-Addukt, 63%ig in Butylglykol/ Wasser/ Eisessig).
Vor der Spritzapplikation wurden zu 100 Teilen der Mischung R1 noch 10 Teile verdünnter Phosphorsäure (8,5 % in VE-Wasser) zugegeben, wie in Tabelle 11 angegeben. Es resultierte die Mischung R2.

| Tabelle 11 | Mischung R2 |
|---|---|
| Mischung R1 | 100 |
| Phosphorsäure 8,5 % | 10 |

Anschließend wurden 110 Teile der Mischung R2 mit 20 Teilen eines Polyisocyanat-Härters (Desmodur N 3600, Hexamethylendiisocyanat-Trimerisat, 78%) gemischt und anschließend mit 15 Teilen VE-Wasser auf Spritzviskosität (20 Sek. ISO 4 / EN ISO 2431) eingestellt.
Das erhaltene Gemisch wurde

1.) als tornadoroter Grundfüller ohne weiteren Schichtaufbau (d.h. als tornadoroter Decklack) sowie
2.) als tornadoroter Grundfüller unter einem Klarlack wie im Folgenden beschrieben eingesetzt.

Substrate: Aluminium, Stahl, verzinkter Stahl
jeweils geschliffen und nachgereinigt
Aufbau 1.) 2 Spritzgänge mit 5 min Zwischenablüftung, Schichtdicke ca. 50 - 60 $\mu$m,
Härtung 30 min bei 60°C
Aufbau 2.) 2 Spritzgänge mit 5 min Zwischenablüftung, Schichtdicke ca. 50 - 60 $\mu$m,
Härtung 30 min bei 60°C
Überlackieren mit handelsüblichem 2K-Klarlack
Härtung 30 min bei 60°C

Die so erhaltenen Aufbauten (Beschichtungen) zeigten gute Haftung und guten Steinschlagschutz auf allen drei Substraten.

**2.5 Basislack Farbton VWL Y 3D (tornadorot)**

Es wurde die Mischung B1 durch Vermischen der Bestandteile nach Tabelle 12 für 15 Minuten in einem Dissolver sowie anschließendes Dispergieren für 120 Minuten in einer Rührwerksmühle hergestellt.

| Tabelle 12 | Mischung B1 |
|---|---|
| Epoxid-Amin-Addukt (I), 63%ig in Butylglykol/Wasser/Eisessig | 36,89 |
| VE-Wasser | 39,8 |
| Essigsäure 10 % in Wasser | 2,9 |
| Butylglykol | 7,4 |
| Irgazin DPP rot BO | 9 |
| Quindoviolett RV 6902/R | 1,6 |
| Chromophtalrot A2B | 0,8 |
| Novopermorange HL-70 | 0,8 |
| Farbruß FW-2 | 0,01 |
| Titanrutil 2310 | 0,8 |

Bei dem Epoxid-Amin-Addukt (I) in Tabelle 12 handelt es sich um das in Beispiel 3 hergestellte Reaktionsprodukt (Epoxid-Amin-Addukt, 63%ig in Butylglykol/ Wasser/ Eisessig).

100 Teile der Mischung B1 wurden mit 20 Teilen eines Polyisocyanat-Härters (Desmodur N 3600, Hexamethylendiisocyanat-Trimerisat, 78%) gemischt und anschließend mit 20 Teilen VE-Wasser auf Spritzviskosität (20 Sek. ISO 4 / EN ISO 2431) eingestellt.

Das erhaltene Gemisch wurde als tornadoroter Basislack auf einem Grundfüller und unter einem Klarlack eingesetzt.

Substrate: Aluminium, Stahl, verzinkter Stahl jeweils geschliffen und nachgereinigt

Aufbau: 2 Spritzgänge weißer Grundfüller gemäß Beispiel 2.1 mit 5 min Zwischenablüftung, Schichtdicke ca. 50 - 60 μm,
Härtung 30 min bei 60°C,
2 Spritzgänge tornadoroter Basislack mit 5 min Zwischenablüftung, Schichtdicke ca. 30 μm,
nach ca. 30 min bei Raumtemperatur überlackieren mit handelsüblichem 2K-Klarlack, Schichtdicke ca. 60 μm
Härtung 30 min bei 60°C

Die so erhaltenen Aufbauten (Beschichtungen) zeigten gute Haftung und guten Steinschlagschutz auf allen drei Substraten.

**3. Herstellung des Epoxid-Amin-Addukts (I)**

In einem Reaktor, der mit einem Rührer, Rückflusskühler, Innenthermometer und Inertgaseinleitung ausgestattet ist, werden 1099,2 Teile Epoxidharz auf Basis von Bisphenol A mit einem Epoxy-Equivalentgewicht (EEW) von 186 g/eq zusammen mit 336,9 Teilen Bisphenol A, 193,6 Teilen Dodecylphenol und 84,1 Teilen Xylol unter Stickstoffatmosphäre auf 125°C aufgeheizt und 10 Minuten gerührt. Anschließend heizt man auf 130°C und gibt 1,6 Teile Triphenylphosphin (Fa. BASF SE) zu. Nach kurzzeitiger Exothermie auf 150°C wird der Reaktionsansatz bei 130°C gehalten, bis das EEW einen Wert von 738 g/eq erreicht hat.

Man gibt nun 412,7 Teile Butylglykol und 997,3 Teile eines Polypropylenglykolglycidylethers mit einem EEW von 392 (Araldit DY 3601; Fa. Huntsman) zu und lässt die Temperatur auf 90°C sinken.

Bei 90°C werden 165,5 Teile 2,2'-Aminoethoxyethanol (Fa. BASF SE) und 10 min später 40 Teile N,N-Dimethylaminopropylamin (Fa. BASF SE) zugesetzt. Es tritt eine exotherme Reaktion ein und die Temperatur steigt auf 120°C. Man hält anschließend noch 2 Stunden bei 110°C, bis die Viskosität bei 359 mPas konstant bleibt (85%-ige Harzlösung, mit Propylenglykolmethylether auf 45% verdünnt; auf Brookfield-Viskosimeter CAP 2000 bei 23°C gemessen). Man kühlt anschließend auf 80°C ab und trägt die Harzlösung aus.

2946,8 Teile der Harzlösung werden in ein Dispergiergefäß überführt, in dem 573,1 Teile deionisiertes Wasser, 462,2 Teile Butylglykol und 17,9 Teile Eisessig vorgelegt sind. Man rührt und homogenisiert eine Stunde und lässt die Harzlösung anschließend auf Raumtemperatur abkühlen. Man erhält eine weißlichhalbtransparente Lösung, die folgende Kennzahlen besitzt:

| | | |
|---|---|---|
| Feststoffgehalt: | 63,3% | (1 h bei 130°C, Einwaage 1,0 g) |
| Basengehalt: | 0,79 | Milliequivalente / g Festkörper |
| Säuregehalt: | 0,11 | Milliequivalente / g Festkörper |
| pH: | 7,6 | |
| Leitwert: | 0,33 mS | (als 10%-ige wässrige Lösung) |
| Hydroxylzahl: | 138,5 | mg KOH/g |

## Patentansprüche

1. Verfahren zur Beschichtung eines gegebenenfalls vorbeschichteten Metall- oder Kunststoffsubstrats durch

   (a) Aufbringen einer wässrigen Beschichtungszusammensetzung (W), deren Bestandteile frei oder im Wesentlichen frei von blockierten Isocyanatgruppen sind, die eine wässrige Dispersion eines Epoxid-Amin-Addukts enthält, welches ein Reaktionsprodukt aus mindestens einem Polyepoxid (P) und mindestens einem Amin (N) ist, und die ein oder mehrere unblockierte Polyisocyanate mit mehr als zwei Isocyanat-Gruppen als Vernetzungsmittel enthält, auf das Substrat,
   (b) gegebenenfalls Aufbringen einer oder mehrerer weiterer Beschichtungszusammensetzungen und
   (c) Härtung der Beschichtungszusammensetzung (W) und gegebenenfalls der weiteren Beschichtungszusammensetzung(en),

   **dadurch gekennzeichnet, dass** die Härtung bei Temperaturen unterhalb von 90 °C erfolgt.

2. Verfahren nach Anspruch 1, **dadurch gekennzeichnet, dass** die Härtung bei Temperaturen unterhalb von 70°C, bevorzugt bei Temperaturen von 60°C oder darunter erfolgt.

3. Verfahren nach Anspruch 1, **dadurch gekennzeichnet, dass** die wässrige Beschichtungszusammensetzung 1 bis 30 Gew.-%, bevorzugt 5 bis 20 Gew.-%, jeweils bezogen auf die gesamte wässrige Beschichtungszusammensetzung (W), des oder der unblockierten Polyisocyanate enthält.

4. Verfahren nach einem der vorhergehenden Ansprüche, **dadurch gekennzeichnet, dass** die wässrige Beschichtungszusammensetzung (W) 1 bis 60 Gew.-%, besonders bevorzugt 5 bis 40 Gew.-%, bezogen auf die gesamte wässrige Beschichtungszusammensetzung (W), des Epoxid-Amin-Addukts enthält.

5. Verfahren nach einem der vorhergehenden Ansprüche, **dadurch gekennzeichnet, dass** die wässrige Beschichtungszusammensetzung (W) 0,1 bis 4,0 Gew.-%, besonders bevorzugt 0,5 bis 2,5 Gew.-%, bezogen auf die gesamte wässrige Beschichtungszusammensetzung (W), an Phosphorsäure enthält.

6. Verfahren nach einem der vorhergehenden Ansprüche, **dadurch gekennzeichnet, dass** der Anteil organischer Lösemittel in der wässrigen Beschichtungszusammensetzung (W) weniger als 30 Gew.-%, bevorzugt weniger als 20 Gew.-% und besonders bevorzugt weniger als 15 Gew.-%, jeweils bezogen auf die gesamte wässrige Beschichtungszusammensetzung (W), beträgt.

7. Verfahren nach einem der vorhergehenden Ansprüche, **dadurch gekennzeichnet, dass** die wässrige Beschichtungszusammensetzung (W) mittels Spritzen und/oder Sprühen auf das Substrat aufgebracht wird.

8. Verfahren nach einem der vorhergehenden Ansprüche, **dadurch gekennzeichnet, dass** es sich bei dem Substrat um ein gegebenenfalls vorbeschichtetes Metallsubstrat aus Aluminium, Stahl oder verzinktem Stahl handelt.

9. Verfahren nach einem der vorhergehenden Ansprüche, **dadurch gekennzeichnet, dass** das Substrat Teil eine Automobilkarosserie ist.

**10.** Verfahren nach einem der vorhergehenden Ansprüche, **dadurch gekennzeichnet, dass** das Substrat eine Altlackierung aufweist.

**11.** Verfahren nach einem der vorhergehenden Ansprüche, **dadurch gekennzeichnet, dass** mindestens eine weitere Beschichtungszusammensetzung aufgebracht wird.

**12.** Beschichtung, erhältlich durch ein Verfahren nach einem der Ansprüche 1 bis 11.

**13.** Substrat, beschichtet mit einer Beschichtung erhältlich nach Anspruch 12.

**14.** Wässrige Zweikomponenten-Beschichtungszusammensetzung, deren Bestandteile frei oder im Wesentlichen frei von blockierten Isocyanatgruppen sind, umfassend eine Komponente (A), die eine wässrige Dispersion eines Epoxid-Amin-Addukts enthält, welches ein Reaktionsprodukt aus mindestens einem Polyepoxid (P) und mindestens einem Amin (N) ist, und eine Komponente (B), **dadurch gekennzeichnet, dass** die Komponente (B) mindestens ein unblockiertes Polyisocyanat mit mehr als zwei Isocyanat-Gruppen als Vernetzungsmittel enthält.


**Claims**

**1.** Method for coating an optionally precoated metallic or plastics substrate by

(a) applying an aqueous coating composition (W) whose constituents are free or substantially free from blocked isocyanate groups, which comprises an aqueous dispersion of an epoxide-amine adduct which is a reaction product of at least one polyepoxide (P) and at least one amine (N), and which comprises one or more nonblocked polyisocyanates having more than two isocyanate groups as crosslinking agents, to the substrate,
(b) optionally applying one or more further coating compositions, and
(c) curing the coating composition (W) and, where appropriate, the further coating composition(s),

**characterized in that** the curing takes place at temperatures of below 90°C.

**2.** Method according to Claim 1, **characterized in that** the curing takes place at temperatures of below 70°C, preferably at temperatures of 60°C or below.

**3.** Method according to Claim 1, **characterized in that** the aqueous coating composition comprises 1% to 30% by weight, preferably 5% to 20% by weight, based in each case on the overall aqueous coating composition (W), of the nonblocked polyisocyanate(s).

**4.** Method according to any of the preceding claims, **characterized in that** the aqueous coating composition (W) comprises 1% to 60% by weight, more preferably 5% to 40% by weight, based on the overall aqueous coating composition (W), of the epoxide-amine adduct.

**5.** Method according to any of the preceding claims, **characterized in that** the aqueous coating composition (W) comprises 0.1% to 4.0% by weight, more preferably 0.5% to 2.5% by weight, based on the overall aqueous coating composition (W), of phosphoric acid.

**6.** Method according to any of the preceding claims, **characterized in that** the fraction of organic solvents in the aqueous coating composition (W) is less than 30% by weight, preferably less than 20% by weight, and more preferably less than 15% by weight, based in each case on the overall aqueous coating composition (W).

**7.** Method according to any of the preceding claims, **characterized in that** the aqueous coating composition (W) is applied to the substrate by means of spraying, including electrostatically assisted spraying.

**8.** Method according to any of the preceding claims, **characterized in that** the substrate is an optionally precoated metallic substrate made of aluminium, of steel or of galvanized steel.

**9.** Method according to any of the preceding claims, **characterized in that** the substrate is part of an automobile body.

**EP 2 547 709 B1**

**10.** Method according to any of the preceding claims, **characterized in that** the substrate has an existing paint finish.

**11.** Method according to any of the preceding claims, **characterized in that** at least one further coating composition is applied.

**12.** Coating obtainable by a method according to any of Claims 1 to 11.

**13.** Substrate coated with a coating obtainable according to Claim 12.

**14.** Aqueous, two-component coating composition whose constituents are free or substantially free from blocked isocyanate groups, comprising a component (A), which comprises an aqueous dispersion of an epoxide-amine adduct which is a reaction product of at least one polyepoxide (P) and at least one amine (N), and a component (B), **characterized in that** the component (B) comprises at least one nonblocked polyisocyanate having more than two isocyanate groups as crosslinking agent.

**Revendications**

**1.** Procédé de revêtement d'un substrat métallique ou plastique éventuellement pré-revêtu par

(a) l'application d'une composition de revêtement aqueuse (W), dont les constituants sont exempts ou essentiellement exempts de groupes isocyanate bloqués, qui contient une dispersion aqueuse d'un adduit époxyde-amine, qui est un produit de réaction d'au moins un polyépoxyde (P) et d'au moins une amine (N), et qui contient un ou plusieurs polyisocyanates non bloqués contenant plus de deux groupes isocyanate en tant qu'agent de réticulation, sur le substrat,
(b) éventuellement l'application d'une ou de plusieurs compositions de revêtement supplémentaires, et
(c) le durcissement de la composition de revêtement (W) et éventuellement de la ou des compositions de revêtement supplémentaires,

**caractérisé en ce que** le durcissement a lieu à des températures inférieures à 90 °C.

**2.** Procédé selon la revendication 1, **caractérisé en ce que** le durcissement a lieu à des températures inférieures à 70 °C, de préférence à des températures de 60 °C ou moins.

**3.** Procédé selon la revendication 1, **caractérisé en ce que** la composition de revêtement aqueuse contient 1 à 30 % en poids, de préférence 5 à 20 % en poids, à chaque fois par rapport à la composition de revêtement aqueuse totale (W), du ou des polyisocyanates non bloqués.

**4.** Procédé selon l'une quelconque des revendications précédentes, **caractérisé en ce que** la composition de revêtement aqueuse (W) contient 1 à 60 % en poids, de manière particulièrement préférée 5 à 40 % en poids, par rapport à la composition de revêtement aqueuse totale (W), de l'adduit époxyde-amine.

**5.** Procédé selon l'une quelconque des revendications précédentes, **caractérisé en ce que** la composition de revêtement aqueuse (W) contient 0,1 à 4,0 % en poids, de manière particulièrement préférée 0,5 à 2,5 % en poids, par rapport à la composition de revêtement aqueuse totale (W), d'acide phosphorique.

**6.** Procédé selon l'une quelconque des revendications précédentes, **caractérisé en ce que** la proportion de solvant organique dans la composition de revêtement aqueuse (W) est inférieure à 30 % en poids, de préférence inférieure à 20 % en poids et de manière particulièrement préférée inférieure à 15 % en poids, à chaque fois par rapport à la composition de revêtement aqueuse totale (W).

**7.** Procédé selon l'une quelconque des revendications précédentes, **caractérisé en ce que** la composition de revêtement aqueuse (W) est appliquée sur le substrat par injection et/ou pulvérisation.

**8.** Procédé selon l'une quelconque des revendications précédentes, **caractérisé en ce que** le substrat consiste en un substrat métallique en aluminium, acier ou acier galvanisé éventuellement pré-revêtu.

**9.** Procédé selon l'une quelconque des revendications précédentes, **caractérisé en ce que** le substrat est une partie d'une carrosserie automobile.

10. Procédé selon l'une quelconque des revendications précédentes, **caractérisé en ce que** le substrat comprend un ancien vernissage.

11. Procédé selon l'une quelconque des revendications précédentes, **caractérisé en ce qu'**au moins une composition de revêtement supplémentaire est appliquée.

12. Revêtement, pouvant être obtenu par un procédé selon l'une quelconque des revendications 1 à 11.

13. Substrat, revêtu avec un revêtement pouvant être obtenu selon la revendication 12.

14. Composition de revêtement bicomposante aqueuse, dont les constituants sont exempts ou essentiellement exempts de groupes isocyanate bloqués, comprenant un composant (A), qui contient une dispersion aqueuse d'un adduit époxyde-amine, qui est un produit de réaction d'au moins un polyépoxyde (P) et d'au moins une amine (N), et un composant (B), **caractérisée en ce que** le composant (B) contient au moins un polyisocyanate non bloqué contenant plus de deux groupes isocyanate en tant qu'agent de réticulation.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3915080 A1
- EP 0941295 A1
- EP 0272525 A2
- WO 9526373 A
- EP 1813633 A1
- EP 0819733 A2
- DE 3518770
- DE 3518732